# EUROPEAN PATENT SPECIFICATION

(11) **EP 2 077 220 B1**
(45) Date of publication and mention of the grant of the patent: **07.08.2013**
(21) Application number: 08254120.2
(22) Date of filing: 23.12.2008
(51) Int. Cl.: B62J 17/06

(54) **Straddle-type vehicle**
Grätschsitz-Fahrzeug
Véhicule de type à enfourcher

(30) Priority: 28.12.2007 JP 2007338784
(43) Date of publication of application: 08.07.2009
(73) Proprietor: Yamaha Hatsudoki Kabushiki Kaisha, Shizuoka-ken 438-8501 (JP)
(72) Inventor: Miyazaki, Takaaki, Iwata-shi Shizuoka-ken 438-8501 (JP)
(74) Representative: Moreland, David

(56) References cited:
- JP-A- 2 053 681
- JP-A- 2004 276 863
- JP-U- 59 032 588
- JP-U- 61 025 292
- US-A1- 2005 279 556

## Description

### FIELD OF THE INVENTION

The present invention relates to a straddle-type vehicle and particularly relates to structures of an under cowl and a side cowl.

### BACKGROUND TO THE INVENTION

Some straddle-type vehicles are equipped with a cowl arrangement for reduction of air resistance and as a windshield during running. Known cowl arrangements may include a cowl which is attached to a handle portion and surrounds a headlamp. Such a cowl is generally known as a bikini cowl. Known cowl arrangements also include an under cowl arranged to cover regions of a cylinder block and a cylinder head of the engine. A vehicle incorporating such an under cowl is disclosed in, for example, Japanese Examined Patent Publication No. 3-62590. In the vehicle of this document, the under cowl is provided to cover both left and right sides of the engine on which a lower connection fin passing transversely across front sides of lower portions of a crankcase and an exhaust pipe is built. The under cowl of this type can advantageously introduce cooling air into the engine during running.

Document JP 2 053 681, which discloses all the features of the preamble of claim 1, is considered to be the closest prior art.

Straddle-type vehicles are often configured so that a side cover is provided in rear of an upper side of an under cowl to form an external shape of left and right sides of an intermediate portion of the vehicle. Furthermore, if a component (such as an electric component) to be frequently subjected to maintenance is arranged inside of the side cover, it is desirable that the side cover is easily detachable. On the other hand, if an attachment structure of the side cover is easily recognizable from the appearance, the straddle-type vehicle often gives the appearance of an inferior or cheap design.

### SUMMARY OF THE INVENTION

According to an aspect of the present invention there is provided a straddle-type vehicle comprising:
a body frame;
an under cowl attached to a lower portion of said body frame and forming an external shape of a lower portion of at least one side of the vehicle;
a side cover provided rearward of said under cowl and forming an external shape of an intermediate portion of the at least one side of the vehicle, wherein the side cover is arranged to be movable forward relative to the body frame; and
a tail cover provided rearward of said side cover and forming an external shape of a rear portion of the at least one side of the vehicle, wherein a front portion of said tail cover overlaps a rear portion of said side cover,
wherein a gap is formed between said side cover and said under cowl to permit the side cover to move forward and the rear portion of said side cover to be detached from the inside of the front portion of said tail cover.

The front portion of the tail cover and the rear portion of the side cover may overlap in a longitudinal direction.

The under cowl may form an external shape of opposing sides of the vehicle. A side cover may be provided on opposing sides of the vehicle. A tail cover may be provided on opposing sides of the vehicle. The opposing sides of the vehicle may be left and right sides.

The side cover may be moveable forward and downwards.

The rear portion of the side cover may be located on an inside of the front portion of the tail cover.

The side cover may be provided rearward of an upper side of the under cowl.

A guide may be formed on said side cover and said tail cover. The guide may be for guiding said side cover to move forward.

The guide may have a guide groove provided on one of an outer side surface of the side cover and an inner side surface of the tail cover. The guide may have a protrusion engaged with said guide groove, wherein the protrusion may be provided on the other of the one of the outer side surface of the side cover and the inner side surface of the tail cover.

Facing or opposing edges of said under cowl and side cover may have shapes longitudinally coincident with each other when said side cover is moved forward.

An engine may be provided inside of said under cowl. A gap may be formed rearward of said under cowl for permitting air introduced from a front side of said under cowl to an inside of said under cowl to pass through the inside of said under cowl during running and rearward of said under cowl.

A gap may be formed at an upper side of said under cowl for emitting air heated by the engine on the inside of the under cowl to upward of the under cowl when the vehicle is stationary.

A battery unit containing a battery may be provided on an inside of the side cover. A pair of opposing side covers may be provided, and a battery unit may be provided between said pair of side covers.

Also described herein is a straddle-type vehicle comprising:
a body frame;
an engine supported by a lower portion of said body frame;
an under cowl attached to the lower portion of said body frame and forming an external shape of a lower portion of at least one side of the vehicle; and
a side cover provided rearward of said under cowl and forming an external shape of an intermediate portion of the at least one side of the vehicle,
wherein a gap is formed between said under cowl and said side cover to permit air introduced into an inside of the under cowl during running to escape.

A gap may be formed in an upper portion of said under cowl to permit air heated by the engine when the vehicle is stationary to pass upward.

A straddle-type vehicle described herein may include a body frame; an under cowl attached to a lower portion of the body frame and forming external shapes of both of left and right sides of a lower portion of the vehicle; a side cover provided in rear of an upper side of the under cowl and forming an external shape of each of both of left and right sides of an intermediate portion of the vehicle; and a tail cover provided in rear of the side cover and forming an external shape of each of both of left and right sides of a rear portion of the vehicle. A rear portion of the side cover is superimposed on an inside of a front portion of the tail cover, the side cover is arranged to be movable forward on a lower side, and a gap enabling the side cover to move forward on the lower side and the rear portion of the side cover to be detached from the inside of the front portion of the tail cover is formed between the side cover and the under cowl.

According to the straddle-type vehicle of aspects of the invention, the side cover is provided to be movable forward and downward, or on the lower side, and the gap enabling the side cover to move forward and downward and the rear portion of the side cover to be detached from the inside of the front portion of the tail cover is formed between the side cover and the under cowl. This can facilitate detaching the side cover.

### BRIEF DESCRIPTION OF THE DRAWINGS

These and other aspects of the present invention will now be described, by way of example only, with reference to the accompanying drawings, in which:
Fig. 1 is a left side view of a straddle-type vehicle according to one embodiment of the present invention;
Fig. 2 is a left side view of the straddle-type vehicle with an under cowl detached according to one embodiment of the present invention;
Fig. 3 is a front view of the straddle-type vehicle with the under cowl attached to the body according to one embodiment of the present invention;
Fig. 4 is a left side view showing parts of the under cowl, a side cowl, and a side cover of the straddle-type vehicle according to one embodiment of the present invention;
Fig. 5 is a cross-sectional view taken along V-V and showing the side cover and an attachment structure of the tail cover of the straddle-type vehicle according to one embodiment of the present invention; and
Fig. 6 is a left side view of the straddle-type vehicle with the side cover moved forward on a lower side according to one embodiment of the present invention.

### DETAILED DESCRIPTION OF THE DRAWINGS

A straddle-type vehicle according to one embodiment of the present invention will be described hereinafter with reference to the accompanying drawings. In the drawings, members or regions exhibiting the same functions are denoted by the same reference symbols, respectively. Further, the present invention is not limited to the following embodiment. Moreover, if expressions such as "front", "rear", "left", "right", "upper", and "lower" are used when referring to the straddle-type vehicle, they are according to directions as seen from a rider in a state in which the rider rides on the straddle-type vehicle in an ordinary riding posture, respectively. Furthermore, a front side of the vehicle is denoted by "Fr", a rear side thereof is denoted by "Rr", a left side thereof is denoted by "L", and a right side thereof is denoted by "R" as necessary. Each drawing is shown on premise that the drawing is seen in a direction of reference symbols.

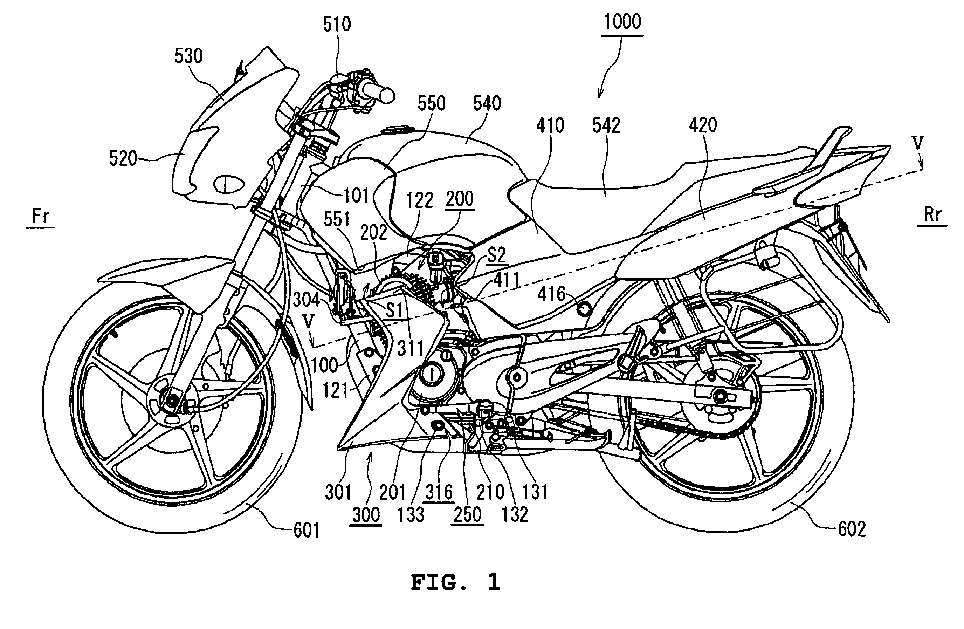

As shown in Fig. 1, a straddle-type vehicle 1000 according to one embodiment of the present invention includes an under cowl 300, a side cover 410, and a tail cover 420. More specifically, in this embodiment, the straddle-type vehicle 1000 includes a small-sized cowl 530 (bikini cowl) covering or surrounding a headlamp 520 attached to a handle 510 as shown in Fig.1. A fuel tank 540 is provided rearward of a head pipe 101 of a body frame 100 to which the handle 510 is attached and a seat 542 is provided rearward of the fuel tank 540. Moreover, small-sized side cowls 550 are attached to both sides of a front portion of the fuel tank 540, respectively.

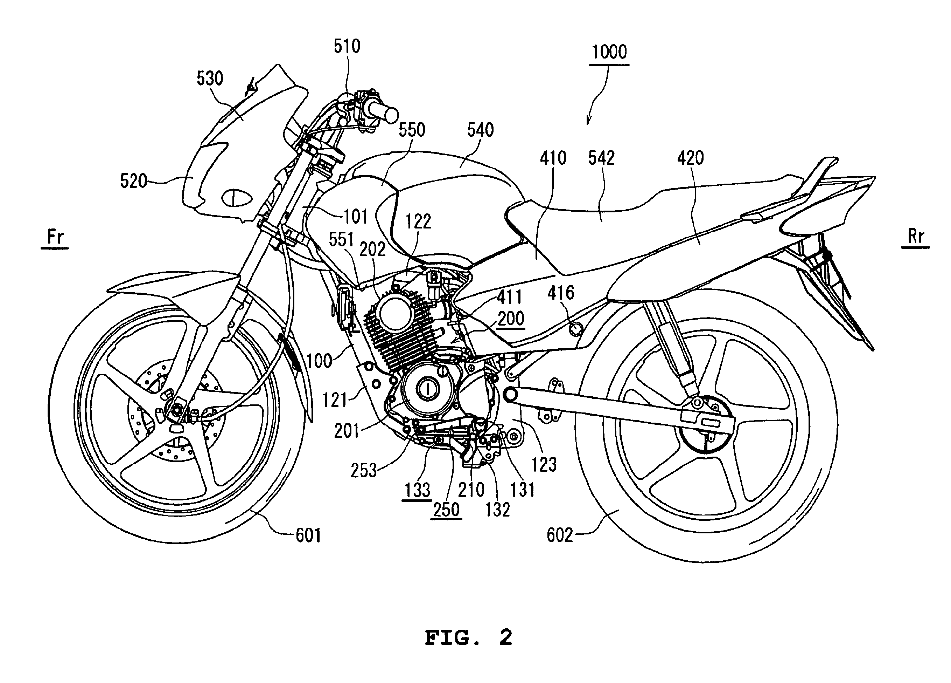

Fig. 2 shows the straddle-type vehicle 1000 with the under cowl 300 detached. As shown in Fig. 2, the engine 200 is arranged below the fuel tank 540. In this embodiment, the engine 200 is attached to the body frame 100 in a space between a front wheel 601 and a rear wheel 602 of the straddle-type vehicle 1000 and below the fuel tank 540. The engine 200 is arranged so that a crankcase 201 is located at a lower position and a cylinder 202 is located at an upper position. An oil reservoir 210, in which oil circulating in the engine 200 is accumulated, is provided below the engine 200. A crankshaft is arranged in the crankcase 201 to be oriented in a vehicle width direction. The engine 200 is attached to the body frame 100 via a plurality of brackets 121, 122, and 123. In this embodiment, a lower portion of the engine 200 is attached to the brackets 121 and 123 and an upper portion of the cylinder 202 of the engine 200 is attached to the bracket 122. Although not shown, a pair of left and right brackets 122 is provided to attach the upper portion of the cylinder 202 to the body frame 100, respectively. In this engine 200, a plurality of fins are provided outside of the cylinder 202. Brackets (footrest brackets 132) to which each footrest 131 is attached are attached to a lower portion of the body frame 100. Further, attachment portions 133 to which the under cowl 300 is attached are provided in the left and right footrest brackets 131, respectively. Moreover, as shown in Fig. 1, an operation pedal 250 for performing transmission operation is provided forward of the footrest 131 shown in Fig. 2.

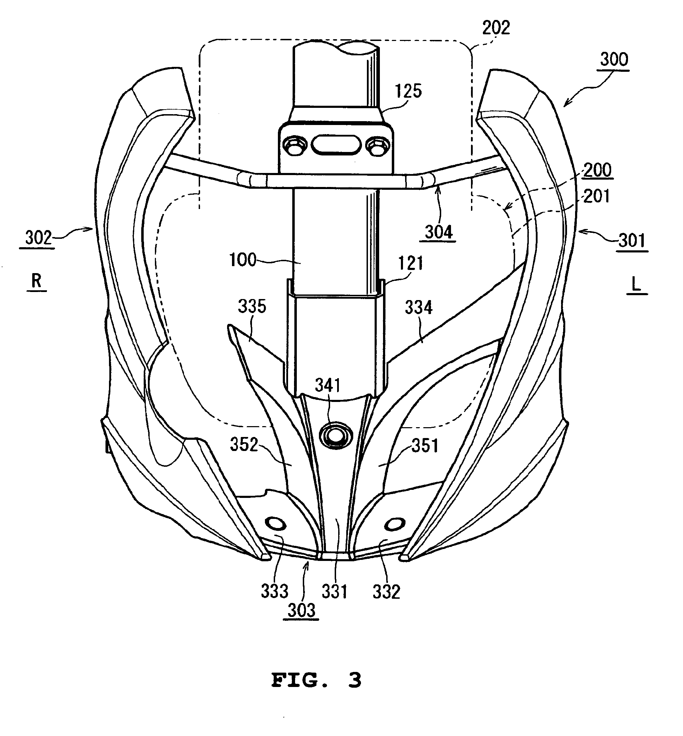

As shown in Fig. 3, in this embodiment, the under cowl is provided with a left side member 301, a right side member 302, a front side member 303 and a stay 304.

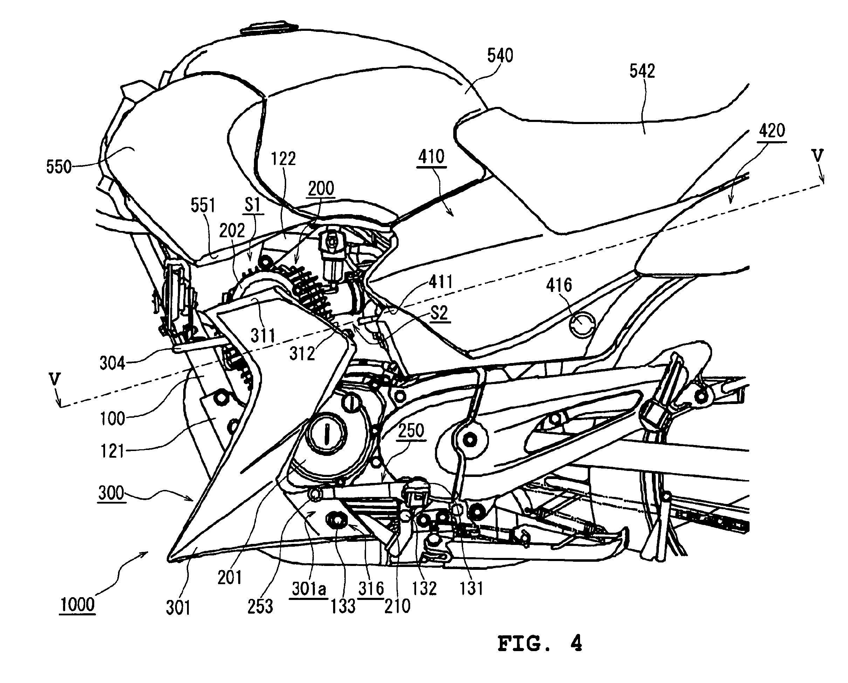

As shown in Fig. 1, the left side member 301 covers up at least a part of a left side of the engine 200. More specifically, in this embodiment, the left side member 301 partially covers up a left side of the cylinder 202 of the engine 200 and a front side of a left side of the crankcase 201. The region is formed into a gently curved shape slightly projecting outward. Further, a lower portion of the left side member 301 extends forward of the lower portion of the body frame 100 and has a vertical width which reduces towards the front side, thus being designed to provide a desired appearance. Furthermore, as shown in Fig. 4, a rear side 301a of the lower portion of the left side member 301 extends between the side portion of the engine 200 and the pedal portion 253 of the operation pedal 250. In this embodiment, the lower portion 316 of the left side member 301 is attached to a bracket attached to the body frame 100 (to be specific, the attachment portion 133 provided on each footrest bracket 132 in this embodiment).

As shown in Fig. 3, the right side member 302 is formed to be substantially bilaterally symmetric with the left side member 301 and covers at least a part of a right side of the engine 200. In this embodiment, although not shown, the right side member 302 partially covers a right side of the cylinder of the engine 200 and a front side of a right side of the crankcase 201. The region is formed into a gently curved shape slightly protruding outward. Moreover, similarly to the left side member 301, a lower portion of the right side member 302 extends beyond the front of the lower portion of the body frame 100, and a rear side of the lower portion of the right side member 302 is fixed to the bracket attached to the body frame 100 (to be specific, the attachment portion 133 provided on one footrest bracket 132 in this embodiment). Rigidity of the under cowl 300 and attachment position accuracy can be thereby improved.

As shown in Fig. 3, the front side member 303 is attached to the body frame 100, extends transversely on the front side of the body frame 100, and is connected with the left side member 301 and the right side member 302 respectively. In this embodiment, the front side member 303 includes a rib 331, first winged portions 332 and 333, and second winged portions 334 and 335. An attachment portion 341 attached to the body frame 100 is provided on the rib 331. In this embodiment, the attachment portion 341 is fastened to the bracket 121 by a bolt. The rib 331 extends forward and downward from a region attached to the body frame 100. Further, left and right side surfaces 351 and 352 of the rib 331 are inclined outward in a left and right width direction as they extend rearward.

The first winged portions 332 and 333 extend leftward and rightward from a tip or lower end of the rib 331 in the width direction, respectively. The second winged portions 334 and 335 extend leftward and rightward from a base or upper end portion of the rib 331 at the upper side of the first winged portions 332 and 333. The left first winged portion 332 and the second winged portion 334 are connected to the left side member 301. The right first winged portion 333 is connected to the right side member 302. This front side member 303 is designed to introduce flowing air from the front side of the vehicle into appropriate regions of the engine 200. Namely, in this embodiment, the under cowl 300 is designed to introduce the flowing air into both of right and left sides of the engine 200 through a space surrounded by the left and right side surfaces 351 and 352 of the rib 331, the left and right first winged portions 332 and 333, and the left and right second winged portions 334 and 335. Furthermore, this under cowl 300 is designed so that the flowing air introduced by upper surfaces of the left and right second winged portions 334 and 335 is struck against a plurality of fins provided on an outsider surface of the cylinder 202 of the engine 200. As shown in Fig. 3, the stay 304 is attached to the body frame 100 above the front side member 303 and supports upper portions of the left side member 301 and the right side member 302.

As shown in Fig. 1, the side cover 410 is arranged rearward of an upper side of the under cowl 300 and forms an external shape of left and right sides of an intermediate portion of the vehicle. The tail cover 420 is arranged rearward of the side cover 410 and forms an external shape of left and right sides of a rear portion of the vehicle.

In this embodiment, as shown in Fig. 4, a gap S1 is provided between an upper edge 311 of the left side member 301 and a lower edge 551 of the side cowl 550, and a gap S2 is provided between an upper edge 312 of the right side member 302 and a front edge 411 of the side cover 410, thus facilitating releasing heat generated in the engine 200 upward. In this embodiment, the engine 200 is arranged inside the under cowl 300. During running, air introduced from the front side of the under cowl 300 to the inside thereof passes rearward through the gap S2 formed in rear of the under cowl 300. It is thereby possible to efficiently take in the flowing air to the inside of the under cowl 300 during running and to efficiently cool the engine 200 by the flowing air. Furthermore, in this embodiment, the air heated by the engine 200 inside of the under cowl 300, primarily when the vehicle is stationary is emitted to the upside of the under cowl 300 through the gap S1 formed upside of the under cowl 300. When the vehicle is stationary, the air can be taken in from downward of the under cowl 300 to follow emission of the air heated by the engine 200 to the upside of the under cowl 300. In this straddle-type vehicle 100, the engine 200 can thereby be efficiently cooled even when the vehicle is stationary.

In this embodiment, the upper edges 311 and 312 of the left side member 301 and the right side member 302 face the lower edge 551 of the above-stated small-sized side cowl 550 and the front edge 411 of the side cover 410 at substantially constant distances, respectively. Further, the respective edges facing each other (311 and 551 and 312 and 411) are substantially parallel. The small-sized side cowl 550, the side cover 410, and the under cowl 300 are designed to appear as if they are connected to each another, although these members are separate components and spaced apart from each another. The various cowls 550, 410, 300 are intended to give the appearance of being provided as a single unit.

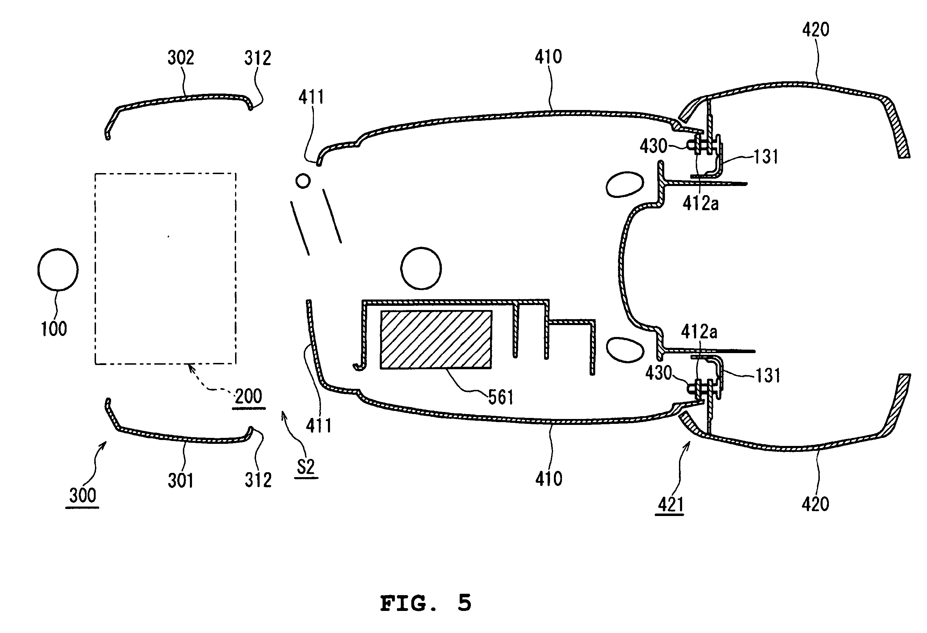

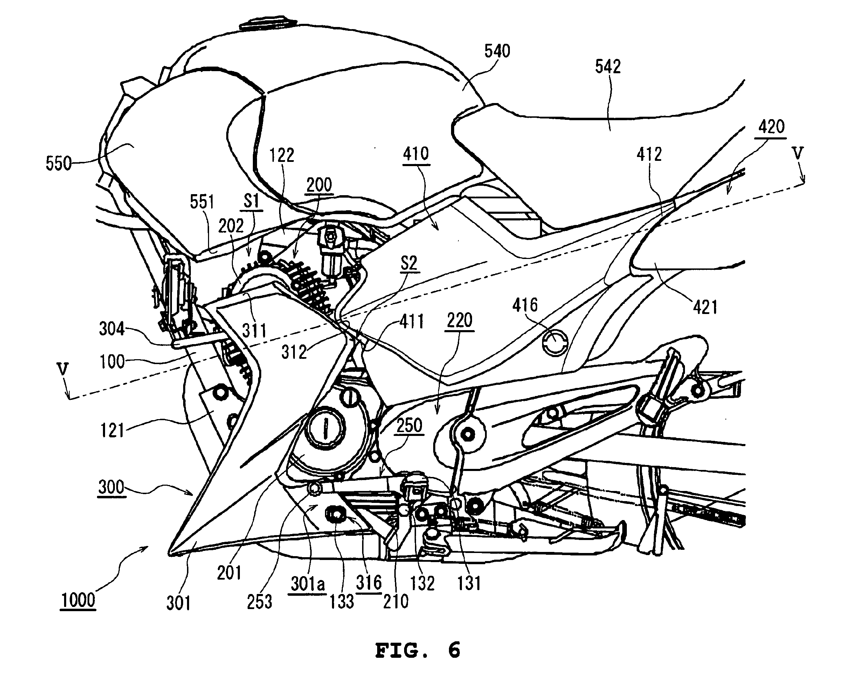

Moreover, as shown in Fig. 5, a rear portion 412 of the side cover 410 is superimposed on, extends into or overlaps the inside of a front portion 421 of the tail cover 420. In this straddle-type vehicle 1000, the side cover 410 is arranged to be movable forward on a lower side. Namely, in this embodiment, a guide 430 guiding the side cover 410 to move obliquely forward and downward (i.e., on the lower side) is provided on the frame 131 for attaching the tail cover 420. A part 412a of the rear portion 412 of the side cover 410 is engaged with the guide 430. By thus engagement, the side cover 410 is guided to the frame 131 and, as shown in Fig. 6, moved obliquely forward and downward with respect to the tail cover 420. Moreover, as shown in Fig. 6, in a state in which the side cover 410 moves forward on the lower side, the part 412a of the rear portion 412 of the side cover 410 is disengaged from the guide 430 of the frame 131. Further, when the side cover 410 is attached, it suffices to engage the part 412a of the rear portion 412 of the side cover 410 with the guide 430 of the frame 131 and, as shown in Fig. 4, to move the side cover 410 rearward and upward (i.e., on an upper side). In this embodiment, as shown in Figs. 4 and 5, the side cover 410 is moved rearward and upward with respect to the tail cover 420 and the rear portion 412 of the side cover 410 is fixed in a state of being superimposed on, extended into or overlapping the inside of the front portion 421 of the tail cover 420. In this embodiment, as shown in Fig. 4, a fastening portion 416 of the side cover 410 is fastened to a bracket (not shown) fixed to the body frame 100.

More specifically, in this embodiment, with the edge 312 of the under cowl 300 facing the edge 411 of the side cover 410, the side cover 410 moves forward and downward as shown in Fig. 6. When the side cover 410 moves forward and downward, the edges 312 and 411 of the under cowl 300 and the side cover 410 longitudinally coincide with each other. In this embodiment, as shown in Fig. 6, the edge 411 of the side cover 410 does not completely coincide in shape with the edge 312 of the under cowl 300 but it suffices that the edges 411 and 312 are formed to be substantially longitudinally superimposed on each other when the side cover 410 moves forward on the lower side. It is thereby possible to set a moving amount of the side cover 410 when the side cover 410 moves forward and downward to a large extent as compared with the gap S2 between the under cowl 300 and the side cover 410.

In this embodiment, as shown in Fig. 5, an electronic component such as a battery unit 561 containing therein a battery and an air cleaner, although not shown, are provided between the left and right side covers 410. Such electronic components are subjected to frequent maintenance, for example, need of checking a state of the component during maintenance or need of regular replacement. Likewise, elements of the air cleaner and the like are components to be replaced frequently. As stated above, according to this straddle-type vehicle 1000, the rear portion 412 of the side cover 410 is superimposed on the inside of the front portion 421 of the tail cover 420. As shown in Fig. 5, the side cover 410 is provided to be movable forward and downward. The gap S2 enabling the side cover 410 to move forward and downward and the rear portion 412 of the side cover 410 to be detached from the inside of the front portion 421 of the tail cover 420 is formed between the side cover 410 and the under cowl 300. As shown in Fig. 6, it is thereby possible to move the side cover 410 to the forward of the lower side, to detach the side cover 410, and to facilitate detaching the side cover 410. Moreover, in this embodiment, the attachment structure of the side cover 410 does not appear to be easily recognizable but gives the impression of a superior or expensive design of the straddle-type vehicle 1000.

The straddle-type vehicle according to one embodiment of the present invention has been described so far based on the drawings. However, the present invention is not limited to the above-stated embodiment.

For example, structures and the like of the under cowl and the tail cover are not limited to the above-stated embodiment and can be variously changed as long as they do not deviate from the concept of the present invention. Further, the present invention is not limited to the above-stated embodiment but can be applied to various types of straddle-type vehicles.

### Description of Reference Numerals

- 100: Body frame
- 101: Head pipe

- 121, 122, 123: Bracket

- 200: Engine
- 201: Crankcase
- 202: Cylinder
- 210: Oil reservoir
- 250: Operation pedal
- 253: Pedal portion
- 300: Under cowl
- 301: Left side member
- 301a: Rear side of lower portion of left side member
- 302: Right side member
- 303: Front side member
- 304: Stay

- 311, 312: Edge (upper edge) of under cowl

- 331: Rib

- 332, 333: First winged portion
- 334, 335: Second winged portion

- 341: Attachment portion

- 351, 352: Left and right side surfaces of rib

- 410: Side cover
- 411: Edge (front edge) of side cover
- 412: Rear portion of side cover
- 420: Tail cover
- 421: Front portion of tail cover

- 430: Guide
- 510: Handle
- 520: Headlamp
- 530: Cowl (bikini cowl)
- 540: Fuel tank
- 542: Seat
- 550: Side cowl
- 551: Edge (lower edge) of side cowl
- 561: Battery unit
- 601: Front wheel
- 602: Rear wheel
- 1000: Straddle-type vehicle
- S1: Gap
- S2: Gap

## Claims

1. A straddle-type vehicle (1000) comprising:
a body frame (100);
an under cowl (300) attached to a lower portion of said body frame (100) and forming an external shape of a lower portion of at least one side of the vehicle (1000);
a side cover (410) provided rearward of said under cowl (300) and forming an external shape of an intermediate portion of the at least one side of the vehicle (1000), wherein the side cover (410) is arranged to be movable forward relative to the body frame (100); and
a tail cover (420) provided rearward of said side cover (410) and forming an external shape of a rear portion of the at least one side of the vehicle (1000), wherein a front portion (421) of said tail cover (420) overlaps a rear portion (412) of said side cover (410)
**characterised in that** a gap (S2) is formed between said side cover (410) and said under cowl (300) to permit the side cover (410) to move forward and the rear portion (412) of said side cover (410) to be detached from the front portion (421) of said tail cover (420).

2. The straddle-type vehicle (1000) according to claim 1, wherein the under cowl (300) forms an external shape of opposing sides of the vehicle (1000).

3. The straddle-type vehicle (1000) according to claim 1 or 2, wherein a side cover (410) is provided on opposing sides of the vehicle (1000).

4. The straddle-type vehicle (1000) according to claim 1, 2 or 3, wherein a tail cover (420) is provided on opposing sides of the vehicle (1000).

5. The straddle-type vehicle (1000) according to any preceding claim, wherein the side cover (410) is moveable forward and downward.

6. The straddle-type vehicle (1000) according to any preceding claim, wherein the rear portion (412) of the side cover (410) is located on an inside of the front portion (421) of the tail cover (420).

7. The straddle-type vehicle (1000) according to any preceding claim, wherein a guide (430) for guiding said side cover (410) to move forward is formed on said side cover (410) and said tail cover (420).

8. The straddle-type vehicle (1000) according to claim 7, wherein said guide (430) has a guide groove provided on one of an outer side surface of the side cover (410) and an inner side surface of the tail cover (420) and has a protrusion engaged with said guide groove, wherein the protrusion is provided on the other of the one of the outer side surface of the side cover (410) and the inner side surface of the tail cover (420).

9. The straddle-type vehicle (1000) according to any preceding claim, wherein facing edges (312, 411) of said under cowl (300) and side cover (410) have shapes longitudinally coincident with each other when said side cover (410) is moved forward.

10. The straddle-type vehicle (1000) according to any preceding claim, wherein an engine (200) is provided inside of said under cowl (300), and a gap (S2) is formed rearward of said under cowl (300) for permitting air introduced from a front side of said under cowl (300) to an inside of said under cowl (300) to pass through the inside of said under cowl (300) during running and rearward of said under cowl (300).

11. The straddle-type vehicle (100) according to any preceding claim, wherein a gap (S1) is formed at an upper side of said under cowl (300) for emitting air heated by an engine (200) on the inside of the under cowl (300) to upward of the under cowl (300) when the vehicle (1000) is stationary.

12. The straddle-type vehicle (1000) according to any preceding claim, wherein a battery unit (561) containing a battery is provided on an inside of the side cover (410).

## Patentansprüche

1. Grätschsitz-Fahrzeug (1000), das aufweist:
ein Karosseriegerippe (100);
einen unteren Windlauf (300), der an einem unteren Abschnitt des Karosseriegerippes (100) befestigt ist und eine äußere Form eines unteren Abschnittes von mindestens einer Seite des Fahrzeuges (1000) bildet;
eine Seitenverkleidung (410), die nach hinten vom unteren Windlauf (300) vorhanden ist und eine äußere Form eines Zwischenabschnittes der mindestens einen Seite des Fahrzeuges (1000) bildet, wobei die Seitenverkleidung (410) so angeordnet ist, dass sie relativ zum Karosseriegerippe (100) nach vorn beweglich ist; und
eine Heckverkleidung (420), die nach hinten von der Seitenverkleidung (410) vorhanden ist und eine äußere Form eines hinteren Abschnittes der mindestens einen Seite des Fahrzeuges (1000) bildet, wobei ein vorderer Abschnitt (421) der Heckverkleidung (420) einen hinteren Abschnitt (412) der Seitenverkleidung (410) überlappt,
**dadurch gekennzeichnet, dass** ein Spalt (S2) zwischen der Seitenverkleidung (410) und dem unteren Windlauf (300) gebildet wird, damit sich die Seitenverkleidung (410) nach vorn bewegen kann, und dass der hintere Abschnitt (412) der Seitenverkleidung (410) vom vorderen Abschnitt (421) der Heckverkleidung (420) demontiert werden kann.

2. Grätschsitz-Fahrzeug (1000) nach Anspruch 1, bei dem der untere Windlauf (300) eine äußere Form der gegenüberliegenden Seiten des Fahrzeuges (1000) bildet.

3. Grätschsitz-Fahrzeug (1000) nach Anspruch 1 oder 2, bei dem eine Seitenverkleidung (410) an den gegenüberliegenden Seiten des Fahrzeuges (1000) vorhanden ist.

4. Grätschsitz-Fahrzeug (1000) nach Anspruch 1, 2 oder 3, bei dem eine Heckverkleidung (420) an den gegenüberliegenden Seiten des Fahrzeuges (1000) vorhanden ist.

5. Grätschsitz-Fahrzeug nach einem der vorhergehenden Ansprüche, bei dem die Seitenverkleidung (410) nach vorn und nach unten beweglich ist.

6. Grätschsitz-Fahrzeug nach einem der vorhergehenden Ansprüche, bei dem der hintere Abschnitt (412) der Seitenverkleidung (410) auf einer Innenseite des vorderen Abschnittes (421) der Heckverkleidung (420) angeordnet ist.

7. Grätschsitz-Fahrzeug nach einem der vorhergehenden Ansprüche, bei dem eine Führung (430) für das Führen der Seitenverkleidung (410), um sich nach vorn zu bewegen, an der Seitenverkleidung (410) und der Heckverkleidung (420) ausgebildet ist.

8. Grätschsitz-Fahrzeug nach Anspruch 7, bei dem die Führung (430) eine Führungsnut aufweist, die an einer von äußerer Seitenfläche der Seitenverkleidung (410) und innerer Seitenfläche der Heckverkleidung (420) vorhanden ist und einen Vorsprung aufweist, der mit der Führungsnut in Eingriff kommt, wobei der Vorsprung an der anderen von äußerer Seitenfläche der Seitenverkleidung (410) und innerer Seitenfläche der Heckverkleidung (420) vorhanden ist.

9. Grätschsitz-Fahrzeug nach einem der vorhergehenden Ansprüche, bei dem gegenüberliegende Ränder (312, 411) des unteren Windlaufs (300) und der Seitenverkleidung (410) Formen aufweisen, die in Längsrichtung miteinander übereinstimmen, wenn die Seitenverkleidung (410) nach vorn bewegt wird.

10. Grätschsitz-Fahrzeug nach einem der vorhergehenden Ansprüche, bei dem ein Motor (200) innerhalb des unteren Windlaufs (300) vorhanden ist und ein Spalt (S2) nach hinten vom unteren Windlauf (300) ausgebildet ist, damit Luft von einer Vorderseite des unteren Windlaufs (300) zu einer Innenseite des unteren Windlaufs (300) eingeführt werden kann, um durch die Innenseite des unteren Windlaufs (300) während des Fahrens und nach hinten vom unteren Windlauf (300) zu gelangen.

11. Grätschsitz-Fahrzeug nach einem der vorhergehenden Ansprüche, bei dem ein Spalt (S1) an einer oberen Seite des unteren Windlaufs (300) für ein Ausstoßen der Luft, die vom Motor (200) auf der Innenseite des unteren Windlaufs (300) erhitzt wird, nach oben vom unteren Windlauf (300) gebildet wird, wenn das Fahrzeug (1000) stillsteht.

12. Grätschsitz-Fahrzeug nach einem der vorhergehenden Ansprüche, bei dem eine Batterieanlage (561), die eine Batterie enthält, auf einer Innenseite der Seitenverkleidung (410) vorhanden ist.

## Revendications

1. Véhicule du type à enfourcher (1000), comprenant :
une carrosserie (100) ;
une partie inférieure d'auvent (300), fixée sur une partie inférieure de ladite carrosserie (100) et établissant une forme externe d'une partie inférieure d'au moins un côté du véhicule (1000) ;
une couverture latérale (410), agencée vers l'arrière de ladite partie inférieure de l'auvent (300) et établissant une forme externe d'une partie intermédiaire du au moins un côté du véhicule (1000), la couverture latérale (410) étant agencée de sorte à pouvoir être déplacée vers l'avant par rapport à la carrosserie (100) ; et
une couverture arrière (420), agencée vers l'arrière de ladite couverture latérale (410) et établissant une forme externe d'une partie arrière du au moins un côté du véhicule (1000), une partie avant (421) de ladite couverture arrière (420) chevauchant une partie arrière (412) de ladite couverture latérale (410) ;
**caractérisé en ce qu'**un espace (S2) est formé entre ladite couverture latérale (410) et ladite partie inférieure de l'auvent (300), pour permettre le déplacement vers l'avant de la couverture latérale (410) et le détachement de la partie arrière (412) de ladite couverture latérale (410) de la partie avant (421) de ladite couverture arrière (420).

2. Véhicule du type à enfourcher (1000) selon la revendication 1, dans lequel la partie inférieure de l'auvent (300) établit une forme externe des côtés opposés du véhicule (1000).

3. Véhicule du type à enfourcher (1000) selon les revendications 1 ou 2, dans lequel une couverture latérale (410) est agencée sur les côtés opposés du véhicule (1000).

4. Véhicule du type à enfourcher (1000) selon les revendications 1, 2 ou 3, dans lequel une couverture arrière (420) est agencée sur les côtés opposés du véhicule (1000).

5. Véhicule du type à enfourcher (1000) selon l'une quelconque des revendications précédentes, dans lequel la couverture latérale (410) peut être déplacée vers l'avant et vers le bas.

6. Véhicule du type à enfourcher (1000) selon l'une quelconque des revendications précédentes, dans lequel la partie arrière (412) de la couverture latérale (410) est agencée sur un intérieur de la partie avant (421) de la couverture arrière (420).

7. Véhicule du type à enfourcher (1000) selon l'une quelconque des revendications précédentes, dans lequel un guide (430), destiné à guider ladite couverture latérale (410) en vue d'un déplacement vers l'avant, est formé sur ladite couverture latérale (410) et ladite couverture arrière (420).

8. Véhicule du type à enfourcher (1000) selon la revendication 7, dans lequel ledit guide (430) comporte une rainure de guidage formée sur une surface, la surface externe de la couverture latérale (410) ou la surface latérale interne de la couverture arrière (420), et comporte une saillie engagée dans ladite rainure de guidage, la saillie étant formée sur l'autre surface, la surface latérale externe de la couverture latérale (410) ou la surface latérale interne de la couverture arrière (420).

9. Véhicule du type à enfourcher (1000) selon l'une quelconque des revendications précédentes, dans lequel les bords opposés (312, 411) de ladite partie inférieure de l'auvent (300) et de la couverture latérale (410) ont des formes coïncidant longitudinalement les uns avec les autres lorsque ladite couverture latérale (410) est déplacée vers l'avant.

10. Véhicule du type à enfourcher (1000) selon l'une quelconque des revendications précédentes, dans lequel un moteur (200) est agencé à l'intérieur de la partie inférieure de l'auvent (300), un espace (S2) étant formé vers l'arrière de ladite partie inférieure de l'auvent (300) pour permettre le passage de l'air, introduit à partir d'un côté avant de ladite partie inférieure de l'auvent (300) vers une partie interne de ladite partie inférieure de l'auvent (300), à travers l'intérieur de ladite partie inférieure de l'auvent (300) au cours du déplacement, et vers l'arrière de ladite partie inférieure de l'auvent (300).

11. Véhicule du type à enfourcher (1000) selon l'une quelconque des revendications précédentes, dans lequel un espace (S1) est formé au niveau d'un côté supérieur de ladite partie inférieure de l'auvent (300), en vue de l'émission de l'air chauffé par un moteur (200) sur l'intérieur de ladite partie inférieure de l'auvent (300) vers le haut de la partie inférieure de l'auvent (300) lorsque le véhicule est stationnaire.

12. Véhicule du type à enfourcher (1000) selon l'une quelconque des revendications précédentes, dans lequel une unité de batterie (561) contenant une batterie est agencée sur une partie interne de la couverture latérale (410).
